(19) Europäisches Patentamt

European Patent Office

Office européen des brevets

(11) Veröffentlichungsnummer: **0 307 645 B1**

# (12) EUROPÄISCHE PATENTSCHRIFT

(45) Veröffentlichungstag der Patentschrift:
16.10.91 Patentblatt 91/42

(21) Anmeldenummer: 88113467.0

(22) Anmeldetag: 19.08.88

(51) Int. Cl.⁵: **B25J 9/02, B25J 18/02**

---

(54) **Vorrichtung für ein Montagesystem der Handhabungstechnik, bestehend aus einem Trägerelement und einer Schlitteneinheit.**

---

(30) Priorität: 27.08.87 CH 3320/87

(43) Veröffentlichungstag der Anmeldung:
22.03.89 Patentblatt 89/12

(45) Bekanntmachung des Hinweises auf die
Patenterteilung:
16.10.91 Patentblatt 91/42

(84) Benannte Vertragsstaaten:
AT BE CH DE ES FR GB GR IT LI LU NL SE

(56) Entgegenhaltungen:
EP-A- 0 106 826
DE-A- 1 431 888
GB-A- 2 176 168
US-A- 3 833 774

(73) Patentinhaber: **Hirschmann, Gregory C.**
**Rautistrasse 12**
**CH-8047 Zürich (CH)**

(72) Erfinder: **Hirschmann, Gregory C.**
**Rautistrasse 12**
**CH-8047 Zürich (CH)**

(74) Vertreter: **EGLI-EUROPEAN PATENT**
**ATTORNEYS**
**Horneggstrasse 4**
**CH-8008 Zürich (CH)**

EP 0 307 645 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung für ein Montagesystem der Handhabungstechnik, bestehend aus einem als Führungsbahn ausgebildeten Trägerelement und mindestens einer linear daran verstellbar angeordneten Schlitteneinheit, welche Schlitteneinheit über ein Kabelschleppglied elektrisch/pneumatisch oder elektrisch/hydraulisch mit einer Energie- und Signalquelle in Wirkverbindung steht und als Anbau- und Trägerelement für weitere entsprechend zu betätigende Peripheriegeräte ausgebildet ist (siehe z.B. GB-A-2176168).

Zur Automatisierung von beliebigen, beispielsweise signalabhängig vorgegebenen Bewegungen und Handhabungsabläufen sind entsprechend ausgebildete Montagesysteme bekannt, bei welchen eine zur Aufnahme eines oder mehrerer Arbeitsorgane ausgebildete Schlitteneinheit auf oder an einem entsprechend ausgebildeten Trägerelement linear verstellbar ist/sind. Die für die einzelnen Bewegungs- und/oder weiteren Handhabungsabläufe erforderliche Energie beziehungsweise elektrischen Steuersignale werden hierbei im wesentlichen über eine, beispielsweise seitlich am Trägerelement angeordnete Kabelschleppkette oder dergleichen der Schlitteneinheit und mittels weiterer, weitgehend freiliegender flexibler Kabel oder Leitungen dem entsprechend zugeordneten Handhabungsorgan (Greifer oder dergleichen) zugeführt.

Demzufolge ist als Aufgabe der Erfindung anzusehen, eine Vorrichtung der eingangs genannten Art zu schaffen, welche unter Beibehaltung eines verhältnismässig einfachen, konstruktiven Aufbaues eine bessere, gegen äusseren Eingriff geschützte Energiezufuhr gewährleistet.

Erfindungsgemäss wird diese Aufgabe dadurch gelöst, dass
a) das Trägerelement als einstückige, durch mehrere im Abstand zueinander angeordnete, die Trägerlänge durchlaufende Böden und Seitenwände gebildete starre Zellenkonstruktion ausgebildet ist und zwischen zwei oberen senkrechten Seitenwänden angeordnet, eine die Trägerlänge durchlaufende Führungsbahn zur Aufnahme des Kabelschleppgliedes, einen an der einen Seite der Führungsbahn anschliessenden Boden zur Aufnahme einer Zahnstange oder dergleichen sowie an zwei unteren senkrechten Seitenwänden seitlich angeordnete Führungselemente zur Lagerung der Schlitteneinheit aufweist, und
b) die Schlitteneinheit ein Gehäuse zur Aufnahme eines mit der Zahnstange in Wirkverbindung stehenden Antriebs-Aggregates und ein Kopfstück zur Aufnahme des Gehäuses umfasst, welches Kopfstück zur weitgehenden Umschliessung des Gehäuses sowie des Trägerelements im Profilquerschnitt U-förmig ausgebildet ist und mit seinen Schenkeln an den Führungselementen des Trägerelements verschiebbar gelagert ist.

Eine andere erfindungsgemässe Lösung der Aufgabe besteht darin, dass das Trägerelement mittels entsprechend ausgebildeter Seitenwände oder lösbar an dem Trägerelement angeordneter Schutzelemente eine in sich geschlossene, gegen äusseren Eingriff geschützte Anordnung bildet, bei welcher nach aussen gerichtete Stege der Schlitteneinheit jeweils in einem entsprechend dafür ausgebildeten, die Trägerlänge in Längsrichtung durchlaufenden, schlitzartig aufgebildeten Spalt angeordnet und im wesentlichen geführt sind.

Weitere zweckmässige Ausgestaltungen und Merkmale der Erfindung ergeben sich aus der folgenden Beschreibung in Verbindung mit der Zeichnung und den einzelnen Patentansprüchen.

Die Erfindung wird nachstehend anhand der Zeichnung beschrieben. Es zeigt :

Fig. 1 ein schematisch und perspektivisch in Ansicht dargestelltes Montagesystem der handhabungstechnik.

Fig. 2 ein in Draufsicht dargestelltes Teilstück einer Führungsbahn mit daran angeordneter Schlitteneinheit für das Montagesystems gemäss Fig. 1.

Fig. 3 einen Schnitt durch die Führungsbahn gemäss der Linie III-III in Fig. 2, und

Fig. 4 eine im Schnitt dargestellte Variante einer Schlitteneinheit für die Führungsbahn des Montagesystems gemäss Fig. 1.

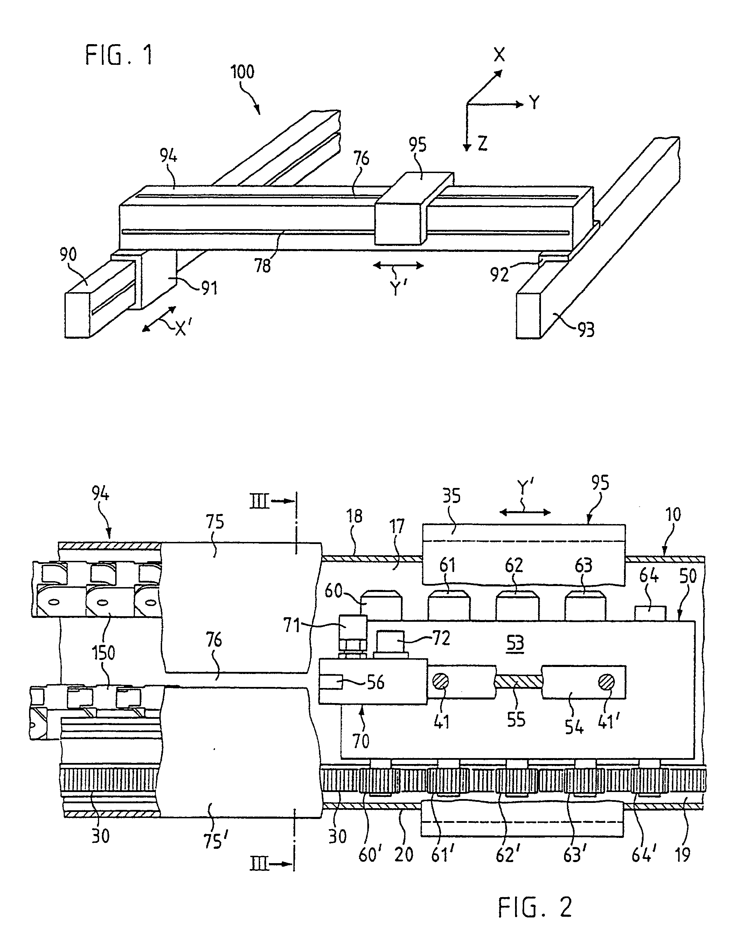

Fig. 1 zeigt zur Verdeulichung der Erfindung ein als allgemeine übersicht schematisch dargestelltes, an sich bekanntes und in seiner Gesamtheit mit 100 bezeichnetes Montagesystem der Handhabungstechnik in Modulbauweise, mit zwei parallel und im Abstand zueinander angeordneten Führungsbahnen 90 und 93, auf welchen eine dritte im wesentlichen quer dazu orientierte Führungsbahn 94 angeordnet ist. Die beiden ersten Führungsbahnen 90 und 93 erstrecken sich bei dieser Anordnung längs einer ersten Koordinatenachse X und die dritte Führungsbahn 94 längs einer zweiten Koordinatenachse Y. An jeder der Führungsbahnen 90, 93 und 94 ist mindestens eine Schlitteneinheit 91, 92 oder 95 angeordnet, wobei im dargestellten Ausführungsbeispiel die beiden Schlitteneinheiten 91, 92 für eine Translation der in nicht näher dargestellter Weise damit wirkverbundenen dritten Führungsbahn 94 und Schlitteneinheit 95 in Pfeilrichtung X' ausgebildet ist. Die Schlitteneinheit 95 ist für eine eigenständige Translation in Pfeilrichtung Y' ausgebildet. Die in Pfeilrichtung Y' bewegbare Schlitteneinheit 95 kann zur Aufnahme und Befestigung einer nicht näher dargestellten, in Pfeilrichtung Z bewegbaren Lineareinheit ausgebildet sein, wobei an der Lineareinheit weiterhin ein Greiferorgan (nicht dargestellt) oder dergleichen angeordnet sein kann. Das nicht dargestellte Greiferorgan kann jedoch auch direkt an der Schlitteneinheit 95 angeordnet und befestigt werden.

Die in Fig. 1 beispielsweise als weitgehend komplettes Montagesystem 100 dargestellten Führungsbahnen 90, 93 und 94 mit den entsprechend darauf oder seitlich daran angeordneten Schlitteneinheiten 91, 92 und 95 für die jeweiligen Bewegungs- und/oder Handhabungsabläufe können entsprechend der an das Montagesystem gestellten Anforderungen auch als einzelne Baueinheit Anwendung finden.

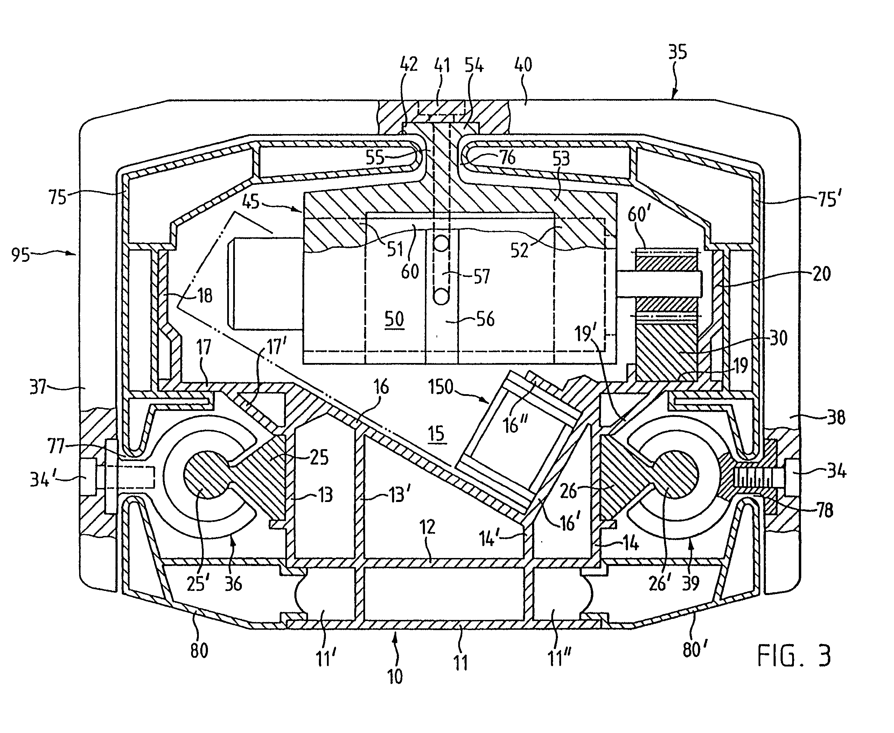

Nachstehend wird in Verbindung mit Fig. 2 und Fig. 3 die als Ausführungsbeispiel und als einzelne Funktionseinheit ausgebildete Führungsbahn 94 mit der darauf angeordneten und längs der Führungsbahn 94 in Pfeilrichtung Y' bewegbaren Schlitteneinheit 95 beschrieben :

Die Führungsbahn 94 hat ein sich über die gesamte Länge erstreckendes, feststehendes Trägerelement 10, welches zur linearen Verstellbewegung der Schlitteneinheit 95 und eines mit der Schlitteneinheit 95 in Wirkverbindung stehenden Kabelschleppgliedes, beispielsweise einer Schleppkette 150 ausgebildet ist.

Das in Fig. 3 im Profilquerschnitt und in grösserm Massstab dargestellte Trägerelement 10 hat einen ersten, unteren Boden 12, an welchen sich zwei im Abstand zueinander angeordnete, etwa senkrechte Seitenwände 13, 14 anschliessen. Ein im oberen Bereich an der einen Seitenwand 13 angeformter oberer Boden 16 ist in bezug auf den unteren Boden 12 schräg nach unten geneigt ausgebildet und mit einem etwa rechtwinklig dazu orientierten Wandstück 16' im wesentlichen mit der anderen, senkrechten Seitenwand 14 verbunden. Der Boden 16 mit dem Wandstück 16' und einem in parallelem Abstand zum Boden 16 angeordneten Teilstück 16'' bilden zusammen eine sich über die gesamte Länge des Trägerelements 10 erstreckende Führungsbahn 15. Die taschenartig ausgebildete Führungsbahn 15 ist zur Aufnahme der in Fig. 3 schematisch und nur teilweie dargestellten Schleppkette 150 ausgebildet. Durch die im Trägerelement 10 entsprechend angeordnete Führungsbahn 15 wird eine gegen äusseren Eingriff geschützte, raumsparende Schräglage und optimale Führung der Schleppkette 150 in dem Trägerelement 10 erreicht. Im oberen Bereich der beiden Seitenwände 13 und 14 sind rechtwinkelig dazu angeordnet, seitlich abstehende Bodenteile 17, 19 sowie etwa rechtwinkelig zu den Bodenteilen 17, 19 weitere Seitenwände 18, 20 vorgesehen, wobei die beiden Bodenteile 17, 19 durch entsprechend angeordnete Querstreben 17', 19' stabilisiert sind. Parallel zu dem ersten Boden 12 ist im unteren Bereich des Trägerelements 10 ein sich bis in den äusseren Bereich der Seitenwände 13, 14 erstreckender, aber nicht mit den Wänden 13, 14 verbundener zweiter Boden 11 vorgesehen, so dass zwischen dem ersten Boden 12 und dem zweiten Boden 11 taschenartige Kammern 11', 11'' gebildet werden, welche sich vorzugsweise über die gesamte Länge des Trägerelements 10 erstrecken und deren Verwendung später noch beschrieben wird. Zur Stabilisierung des Trägerelements 10 sind weitere, vom oberen, eine Schräglage einnehmenden Boden 16 bis zum zweiten, unteren Boden 11 reichende, und im Abstand zu den Seitenwänden 13, 14 angeordnete Zwischenwände 13', 14' vorgesehen. Das vorstehend in seiner formgebenden Ausgestaltung beschriebene und im wesentlichen die Böden 11, 12, 16, 17 und 19 sowie die Wände 13, 13' ; 14, 14' ; 18 und 20 umfassende Trägerelement 10 bildet eine starre Zellenkonstruktion und ist vorzugsweise als einstückiger Profilkörper ausgebildet und in an sich bekanntem Strangpressverfahren beispielsweise aus Leichtmetall, vorzugsweise aus Aluminium hergestellt.

Zu beiden Seiten des Trägerelements 10 ist, wie in Fig. 3 dargestellt, je ein Führungselement 25, 26 angeordnet, welches sich ebenfalls in nicht näher dargestellter Weise über die gesamte Länge des Trägerelements 10 erstreckt. Das einzelne, unterhalb der oberen Böden 17, 19 angeordnete und im vorderen Bereich beispielsweise als Rundprofil 25', 26' ausgebildete Führungselement 25, 26 ist mit nicht näher dargestellten Mitteln an den Seitenwänden 13, 14 des Trägerelements 10 lösbar befestigt und dient im wesentlichen zur verschiebbaren Lagerung und linearen Führung der Schlitteneinheit 95.

Auf dem einen, seitlich abstehenden Bodenteil 19 des Trägerelements 10 ist eine Zahnstange 30 angeordnet, welche sich auch über die gesamte Länge des Trägerelements 10 erstreckt und mit nicht näher dargestellten Mitteln lösbar am Bodenteil 19 befestigt ist.

Die an dem Trägerelement 10 angeordnete und im wesentlichen mit der am Boden 19 befestigten Zahnstange 30 in Wirkverbindung stehende Schlitteneinheit 95 umfasst, wie in Fig. 3 dargestellt, ein dass Trägerelement 10 weitgehend umgreifendes und im Profilquerschnitt U-förmig ausgebildetes Kopfstück 35 mit zwei parallelen Schenkeln 37, 38 und einem die beiden Schenkel 37 und 38 miteinander verbindenden Zwischenstück 40. Das im wesentlichen als Halter für ein in seiner Gesamtheit mit 45 bezeichnetes Antriebs-Aggregat dienende Kopfstück 35 hat innenseitig an jedem der Schenkel 37, 38 angeordnet mindestens ein mit entsprechenden Gleitelementen (nicht dargestellt) versehenes Lagerteil 36 und 39. Das einzelne, klauenartig das jeweilige Führungselement 25 oder 26 umgreifende Lagerteil 36 oder 39 ist mittels Schrauben 34, 34', wie auf der einen Seite in teilweise aufgeschnittenem Zustand dargestellt, an den Schenkeln 37, 38 des Kopfstückes 35 lösbar befestigt.

Bei einem nicht näher dargestellten Ausführungsbeispiel sind an den Schenkeln 37, 38 des Kopfstückes 35 jeweils zwei, vorzugsweise aber mehrere (nicht dargestellt) im Abstand zueinander angeordnete, als Gleitlager (Kugel-, Nadellager oder dergleichen) ausgebildete Lagerteile 36, 39 vorgesehen, welche Lagerteile 36, 39 eine optimale, d.h., eine leichtgängige Verstellbewegung der gesamten Schlitteneinheit 95 in Pfeilrichtung Y' (Fig. 1 und Fig. 2) gewährleisten. Die Lagerteile 36, 39 können auch einstückig ausgebildet sein und sich in Bewegungsrichtung Y' (Fig. 2) über die gesamte Länge (nicht dargestellt) des Kopfstückes 35 erstrecken.

Wie bereits vorstehend erwähnt, so ist das Zwischenstück 40 des U-förmigen Kopfstückes 35 zur Aufnahme und Befestigung des Antriebs-Aggregates 45 ausgebildet. Das Antriebs-Aggregat 45 umfasst im wesentlichen ein Gehäuse 50, welches zur Aufnahme und Lagerung eines, oder wie in Fig. 2 schematisch dargestellt, mehrerer Antriebe 60, 61, 62 und 63 ausgebildet ist. Die vorzugsweise als Gleichstrom-Motoren ausgebildeten Antriebe 60 bis 63 sind achsparallel in Reihe hintereinander angeordnet und in nicht näher dargestellter Weise in den Seitenwänden 51 und 52 des Gehäuses 50 gelagert. Auf der einen, der Zahnstange 30 zugewandten Seite ist jeder einzelne Motor 60, 61, 62 und 63 mittels einer nicht bezeichneten und näher dargestellten Welle und einem an der Welle entsprechend angeordneten Zahnritzel 60', 61', 62' und 63' mit der Zahnstange 30 wirkverbunden. Weiterhin erkennt man in Fig. 2 eine schematisch dargestellte und in dem Gehäuse 50 in nicht näher dargestellter Weise gelagert Weg-Messeinrichtung 64, welche ebenfalls über ein Zahnritzel 64' mit der Zahnstange 30 in Eingriff steht.

Das zur Lagerung der Teile 60 bis 64 vorgesehene und im Profilquerschnitt etwa U-förmige Gehäuse 50 hat ein, wie in Fig. 3 in teilweise aufgeschnittenem Zustand dargestellt, die beiden Wände 51, 52 miteinander verbindendes und als obere Abdeckung ausgebildetes Zwischenstück 53. An dem Zwischenstück 53 ist ein in Längsrichtung (Fig. 2) des Gehäuses 50 orientiertes, aus einem Steg 55 mit Flansch 54 T-förmig ausgebildetes Teilstück und an der einen Stirnseite (Fig. 3) ein weiterer Steg 56 angeformt. Das beispielsweise als einstückiges Aluminium-Gussteil ausgebildete Gehäuse 50 ist mit dem Flansch 54 in einem im Kopfstück 35 vorgesehenen und in Längsrichtung orientierten Ausnehmung 42 angeordnet und wie in Fig. 3 in teilweise aufgeschnittenem Zustand dargestellt, mittels Schrauben 41, 41' befestigt, so dass das Kopfstück 35 mit dem die Teile 50, 60 bis 64 umfassenden Antriebs-Aggregat 45 eine Baueinheit bildet.

Wie in Fig. 2 weiterhin dargestellt, ist an dem einen Ende des Gehäuses 50 in schematisch dargestelltes und in nicht näher dargestellter Weise am Flansch 54 befestigtes Verteilerelement 70 angeordnet, welches einen mit 71 bezeichneten ersten Stutzen für den Anschluss einer hydraulischen oder pneumatischen Leitung sowie einen zweiten Stutzen 72 zum Anschluss einer elektrischen Leitung aufweist. Die einzelnen, nicht dargestellten Leitungen für die Energie- und Signalübertragung werden im wesentlichen über die Schleppkette 150 dem Gehäuse 50 beziehungsweise dem Antriebs-Aggregate 45 zugeführt.

Zur Sicherung gegen äusseren, unbeabsichtigten Eingriff in die sich bewegenden Teile, sind, wie in Fig. 2 und Fig. 3 dargestellt, entsprechend als Hohlkörper mit mehreren, nicht näher bezeichneten Kammern ausgebildete Schutzelemente 75, 75' und 80, 80' vorgesehen, welche mit nicht näher dargestellten Mitteln, vorzugsweise durch eine Klemmverbindung am Trägerelement 10 lösbar befestigt sind. Die im oberen Bereich zu beiden Seiten des Trägerelements 10 angeordneten und bis auf einen, für den Steg 55 des Gehäuses 50 ausgebildeten Spalt 76 das Trägerelement 10 weitgehend umgreifenden Schutzelemente 75, 75' sind beispielsweise an den Seitenwänden 18, 20 und an der unteren Seite der Böden 17, 19 angeklemmt. Die im unteren Bereich zu beiden Seiten des Trägerelements 10 angeordneten Schutzelemente 80, 80' werden in die taschenartig ausgebildeten Kammern 11', 11'' eingeklemmt. Die sich über die gesamte Länge des Trägerelementes 10 erstreckenden Schutzelemente 75, 75' und 80, 80' sind derart zueinander angeordnet und am Trägerelement 10 befestigt, dass einerseits der Spalt 76 für den Steg 55 des Gehäuses 50 und andererseits zu beiden Seiten des Trägerelements 10 ein Spalt 77 beziehungsweise 78 für die am Kopfstück 35 angeordneten und befestigten Lagerteile 36, 39 entsteht, so dass die Schlitteneinheit 95, wie in Fig. 1 und Fig. 2 mit Pfeilrichtung Y' angedeutet, in Längrichtung der Führungsbahn 94 frei beweglich verschiebbar ist.

Die als Profil-Hohlkörper ausgebildeten und durch mehrere im Abstand zueinander angeordnete, nicht näher bezeichnete Rippen und Stege im Innenbereich unterteilten Schutzelemente 75, 75' und 80, 80' sind beispielsweise aus Kunststoff hergestellt und bilden eine in sich stabile Einheit. Die aufgrund der Rippen und Stege gebildeten, nicht näher bezeichneten Kammern in den Schutzelementen 75, 75' und 80, 80' können zur Dämpfung von eventuell auftretenden Vibrationen mit geeignetem Kunststoff ausgeschäumt werden, wodurch eine zusätzliche Stabilität der einzelnen Schutzelemente erreicht wird.

Bei einer nicht näher dargestellten Variante zur Sicherung gegen unbeabsichtigten äussern Eingriff besteht die Möglichkeit. die beiden Seitenwände 18, 20 des Trägerelements 10 über die gesamte Länge hinweg in bezug auf die Böden 17, 19 nach oben hin zu vergrössern und daran unter Beibehaltung des Spalts 76 jeweils eine entsprechend nach innen gerichtete Abdeckung anzuordnen beziehungsweise anzuformen. Der untere Bereich des Trägerelements kann analog ausgebildet werden, so dass das Trägerelement 10 mit den einzelnen Funktionsteilen, welche bei dieser Ausführungsform von der Stirnseite eingebracht werden müssen, eine in sich

EP 0 307 645 B1

geschlossene Baueinheit bildet.

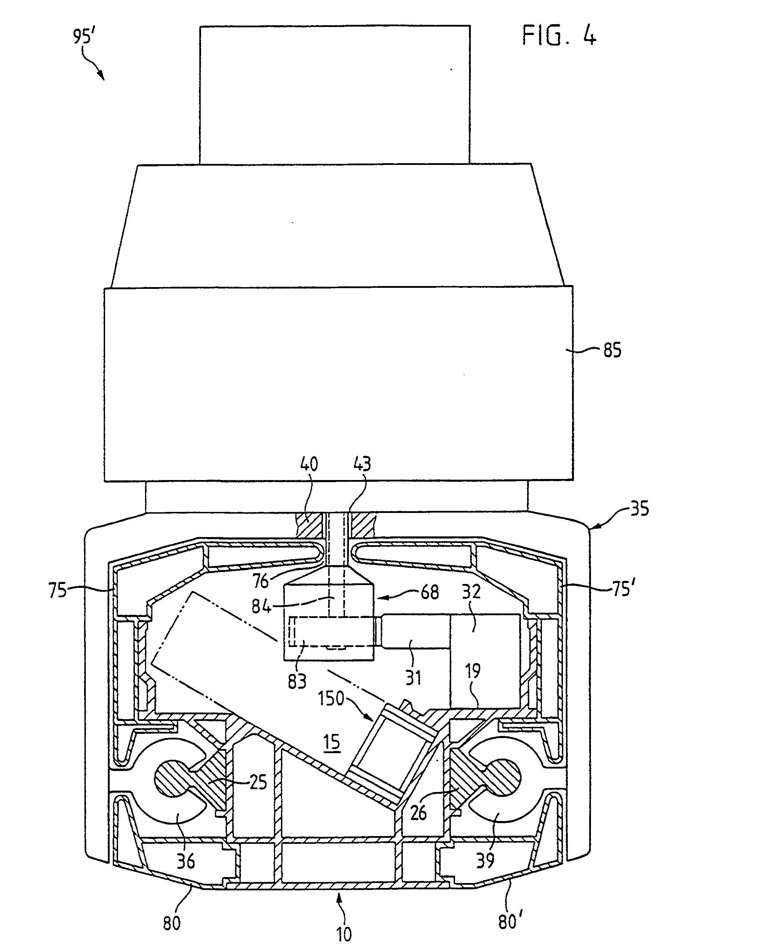

Fig. 4 zeigt als Variante eine in Schnittansicht dargestellte und in ihrer Gesamtheit mit 95' bezeichnete Schlitteneinheit und man erkennt das mit 10 bezeichnete Trägerelement mit den zu beiden Seiten angeordneten Schutzelementen 75, 75' und 80, 80', die in der Tasche 15 angeordnete und gelagerte Schleppkette 150 sowie das im wesentlichen mit den Teilen 36, 39 an den Führungselementen 25, 26 gelagerte Kopfstück 35.

Abweichend von der ersten Variante gemäss Fig. 3 ist bei diesem schematisch dargestellten Ausführungsbeispiel als Antriebs-Aggregat ein einzelner, aussen auf dem Kopfstück 35 angeordneter und mit nicht dargestellten Mitteln damit wirkverbundener Gleichstrom-Motor 85 vorgesehen. Der Motor 85 hat eine Welle 84, welche das teilweise aufgeschnitten dargestellte und mit einer entsprechend ausgebildeten und angeordneten Bohrung 45 versehene Zwischenstück 40 des Kopfstückes 35 durchdringt. Im inneren Bereich des Kopfstückes 35 ist an der Welle 84 ein Zahnritzel 83 angeordnet und in einem schematisch dargestellten Gehäuse 68 gelagert. Das mit der Welle 84 wirkverbundene Zahnritzel 83 steht mit einer Zahnstange 31 in Eingriff, wobei die Zahnstange 31 mit nicht dargestellten Mitteln an einer am Boden 19 des Trägerelements 10 befestigten, blockartig ausgebildeten Schiene 32 angeordnet ist. Die beiden, sich über die gesamte Länge des Trägerelements 10 erstreckenden Teile 31 und 32 können auch einstückig ausgebildet und mit nicht dargestellten Mitteln am Boden 19 lösbar befestigt sein.

An dieser Stelle sei darauf hingewiesen, dass alle in Fig. 4 nicht näher bezeichneten Teile mit den entsprechenden Teilen gemäss Fig. 3 identisch und aus Gründen der besseren Übersicht in Fig. 4 nicht zusätzlich bezeichnet sind.

Die für die Betätigung der Schlitteneinheit 95 oder 95' erforderliche, elektrisch/pneumatische oder elektrisch/hydraulische Energie-Zuführung erfolgt im wesentlichen über das mit entsprechenden Anschlüssen (nicht dargestellt) versehene Trägerelement 10 der jeweiligen Führungsbahn. Von aussen an das Trägerelement 10 herangeführte, flexible Leitungen (nicht dargestellt) werden hierbei von der einerseits an entsprechender Stelle des Trägerelement 10 und andererseits an der Schlitteneinheit befestigten und innerhalb der Führungsbahn 15 im wesentlichen eine schlaufenartige Umlenkung bildende Schleppkette 150 aufgenommen. Die aus einer Vielzahl gelenkig miteinander verbundenen Gliedern, vorzugsweise aus Kunststoff-Gliedern bestehende Schleppkette 150 gewährleistet bei den verhältnismässig schnellen Bewegungen ein einwandfreies Abrollen der innerhalb der Schleppkette 150 angeordneten Leitungen.

Die dem Gehäuse 50 beziehungsweise 68 von der Schleppkette 150 zugeführten, nicht näher dargestellten Leitungen werden vorzugsweise an der stirnseite des jeweiligen Gehäuses angeschlossen. In diesem Bereich ist auch die Schleppkette 150 vorzugsweise mit dem Gehäuse wirkverbunden. Über ein im Gehäuse 50 oder 68 angeordnetes Kanalsystem 57 (Fig. 3), welches mehrere nicht näher bezeichnete, die Stege und Wände der Gehäuse durchdringende Bohrungen oder dergleichen umfasst, wird einerseits den Motoren 60, 61, 62, 63 beziehungsweise 85 und andererseits dem in vorderen Bereich des Gehäuses angeordneten Verteilerelement 70 Energie oder Signale zugeführt.

Durch diese spezielle, im wesentliche integrierte Einergie- und Signalzuführung ist ein unbeabsichtigter Eingriff in die sich bewegenden Elemente ausgeschlossen. Die Energie- und Signalzuführung zu einem Peripheriegerät kann weitgehend durch direkten Anschluss am blockartig ausgebildeten Verteilerelement 70 erfolgen, wodurch störanfällige, flexible Leitungen nicht mehr erforderlich sind.

## Patentansprüche

1. Vorrichtung für ein Montagesystem (100) der Handhabungstechnik, bestehend aus mindestens einem als Führungsbahn (94) ausgebildeten Trägerelement (10) und mindestens einer linear daran verstellbar angeordneten Schlitteneinheit (95), welche Schlitteneinheit über ein Kabelschleppglied elektrisch/pneumatisch oder elektrisch/hydraulisch mit einer Energie- und Signalquelle in Wirkverbindung steht und als Anbau- und Trägerglied für weitere, entsprechend zu betätigende Peripheriegeräte ausgebildete ist, dadurch gekennzeichnet, dass

a) das Trägerelement (10) als einstückige, durch mehrere im Abstand zueinander angeordnete, die Trägerlänge durchlaufende Böden und Seitenwände gebildete starre Zellenkonstruktion ausgebildet ist und zwischen zwei oberen senkrechten Seitenwänden (18, 20) angeordnet, eine die Trägerlänge durchlaufende Führungsbahn (15) zur Aufnahme des Kabelschleppgliedes (150), einen an der einen Seite der Führungsbahn (15) anschliessenden Boden (19) zur Aufnahme einer Zahnstange (30) oder dergleichen sowie an zwei unteren senkrechten Seitenwänden (13, 14) seitlich angeordnete Führungselemente (25, 26) zur Lagerung der Schlitteneinheit (95) aufweist, und

b) die Schlitteneinheit (95) ein Gehäuse (50) zur Aufnahme eines mit der Zahnstange (30) in Wirkverbindung stehenden Antriebs-Aggregates (45) und ein Kopfstück (35) zur Aufnahme des Gehäuses (50)

5

umfasst, welches Kopfstück (35) zur weitgehenden Umschliessung des Gehäuses (50) sowie des Trägerelements (10) im Profilquerschnitt U-förmig ausgebildet ist und mit seinen Schenkeln (37, 38) an den Führungselementen (25, 26) des Trägerelements (10) verschiebbar gelagert ist.

2. Vorrichtung nach Anspruch 1, dadurch gekennzeichnet, dass die Führungsbahn (15) taschenartig ausgebildet und derart in dem Trägerelement (10) angeordnet ist, dass das in der Führungsbahn (15) angeordnete Kabelschleppglied (150) eine raumsparende Schräglage aufweist.

3. Vorrichtung nach Anspruch 1 und 2, dadurch gekennzeichnet, dass das Trägerelement (10) einen etwa horizontalen, unteren Boden (12) sowie einen mittels der Seitenwände (13, 14) im Abstand parallel dazu angeordneten, aus Teilstücken (17, 19) und Teilstücken (16, 16') gebildeten oberen Boden umfasst, bei welchem oberen Boden das am Teilstück (17) anangeformte, mittlere Teilstück (16) zur Bildung der Führungsbahn (15) in bezug auf den unteren Boden (12) schräg nach unten geneigt und mit dem etwa rechtwinkelig dazu angeordneten Teilstück (16') mit dem anderen Teilstück (19) verbunden ist.

4. Vorrichtung nach Anspruch 1 bis 3, dadurch gekennzeichnet, dass die an den Seitenwänden (13, 14) angeordneten Führungselemente (25, 26) räumlich unterhalb der beiden oberen Boden-Teilstücke (17, 19) angeordnet sind.

5. Vorrichtung nach Anspruch 1, dadurch gekennzeichnet, dass das U-förmig ausgebildete Kopfstück (35) ein die beiden seitlichen Schenkel (37, 38) miteinander verbindendes Zwischenstück (40) aufweist, an welchem ein zur Aufnahme mindestens eines über ein Zahnritzel (60', 61', 62', 63', 83) mit der Zahnstange (30) in Eingriff stehenden Motors (60, 61, 62, 63 oder 85) ausgebildetes Gehäuse (50, 68) angeordnet ist.

6. Vorrichtung nach Anspruch 5, dadurch gekennzeichnet, dass in dem Gehäuse (50) in Reihe angeordnete Gleichstrom-Motoren (60, 61, 62, 63) angeordnet sind, welche jeweils mit dem Zahnritzel (60', 61', 62', 63') mit der Zahnstange (30) wirkverbunden sind.

7. Vorrichtung nach Anspruch 5 und 6, dass das Gehäuse (50) mit den Motoren (60, 61, 62, 63) eine Baueinheit bildet und mittels einem am oberen Gehäuseteil (53) vorgesehen T-förmigen Teilstück (55, 54) am Zwischenstück (40) des Kopfstückes (35) lösbar befestigt ist.

8. Vorrichtung nach einem der Ansprüche 1 bis 7, dadurch gekennzeichnet, dass an dem Gehäuse (50, 68) ein ausserhalb des Kopfstückes (35) angeordnetes und an dem Flansch (54) des T-förmigen Teilstücks (55) lösbar befestigtes Verteiler- und Anschlusselement (70) vorgesehen ist, welches mit einem im Gehäuse entsprechend angeordneten Kanalsystem (57) für die Energie- und Signalzuführung in Verbindung steht.

9. Vorrichtung nach Anspruch 1, dadurch gekennzeichnet, dass an beiden Seiten des Trägerelements (10) je ein Schutzelement (75, 75') angeordnet ist, welche Schutzelemente in montiertem Zustand im oberen, mittleren Bereich einen in Längsrichtung des Trägerelements (10) orientierten Spalt (76) für das T-förmige Teilstück (55) bilden und seitlich bis etwa in den Bereich der am Kopfstück (35) angeordneten Lagerteile (36, 39) reichend ausgebildet sind.

10. Vorrichtung nach Anspruch 1, dadurch gekennzeichnet, dass seitlich im unteren Bereich des Trägerelements (10) zwei weitere Schutzelemente (80, 80') angeordnet sind, welche mit ihren senkrechten Teilstücken ebenfalls bis etwa in den Bereich der Lagerteile (36, 39) reichend ausgebildet sind und zusammen mit den oberen Schutzelementen (75, 75') auf beiden Seiten einen in in Längsrichtung des Trägerelements (10) orientierten Spalt (77, 78) für die Lagerteile (36, 39) des Kopfstückes (35) bilden.

11. Vorrichtung nach Anspruch 9 und 10, dadurch gekennzeichnet, dass die Schutzelemente (75, 75' ; 80, 80') lösbar, vorzugsweise durch eine entsprechend ausgebildete Klemmverbindung an dem Trägerelement (10) befestigt sind.

12. Vorrichtung nach Anspruch 9 bis 11, dadurch gekennzeichnet, dass die Schutzelemente (80, 80' ; 75, 75') vorzugsweise aus geeignetem Kunststoff hergestellt und die in dem einzelnen Schutzelement durch Rippen und Stege gebildeten Hohlräume ausgeschäumt sind.

13. Vorrichtung nach Anspruch 1 und 9, dadurch gekennzeichnet, dass die beiden oberen Seitenwände (18, 20) des Trägerelements (10) als obere Schutzelemente ausgebildet sind und einen in Längsrichtung orientierten, die Seitenwände in diesem Bereich voneinander trennenden Spalt (76) bilden.

14. Vorrichtung nach einem der Ansprüche 1 bis 13, dadurch gekennzeichnet, dass das Trägerelement (10) mit den einzelnen Schutzelementen (75, 75' ; 80, 80') und der aus den einzelnen Funktionsteilen sowie der Energie- und Signalzuführung gebildeten Schlitteneinheit (95) als ein in sich geschlossenes, gegen äusseren Eingriff geschütztes System ausgebildet ist.

**Revendications**

1. Dispositif pour un système de montage (100) de la technique de manipulation, constitué d'au moins un élément porteur (10) réalisé sous la forme d'un chemin de guidage (94) et d'au moins un élément chariot (95) disposé de façon à pouvoir coulisser linéairement sur celui-ci, lequel élément chariot est relié électro-pneumatiquement ou électro-hydrauliquement pour son entraînement avec une source d'énergie et de signaux par l'intermédiaire d'un organe porte-câble remorqué et lequel est conçu comme organe d'adaptation et organe porteur pour d'autres accessoires périphériques à actionner de façon correspondante, caractérisé en ce que:

a) l'élément porteur (10) est réalisé en une seule pièce, sous la forme d'une construction cellulaire rigide, formée de plusieurs parois de plancher et parois latérales, sur toute la longueur de l'élément porteur, disposées à une certaine distance les unes des autres, et présente, disposés entre deux parois latérales (18, 20) supérieures verticales, un chemin de guidage (15) sur toute la longueur de l'élément porteur, pour recevoir l'organe porte-câble remorqué (150), un plancher (19), faisant suite sur l'un des côtés du chemin de guidage (15), pour recevoir une crémaillère (30), ou similaire, ainsi que des organes de guidage (25, 26), disposés sur le côté de deux parois latérales inférieures verticales (13, 14), pour y installer l'élément chariot (95), et

b) l'élément chariot (95) comporte un carter (50) pour recevoir un ensemble moteur (45) relié positivement avec la crémaillère (30) et une pièce de tête (35) pour recevoir le carter (50), ladite pièce de tête (35) étant réalisée avec une section à profil en forme de U, pour envelopper largement le carter (50) ainsi que l'élément porteur (10), et étant montée, avec ses deux branches (37, 38), sur les organes de guidage (25, 26) de l'élément porteur (10).

2. Dispositif suivant la revendication 1, caractérisé en ce que le chemin de guidage (15) est réalisé sous la forme de compartiments et disposé dans l'élément porteur (10) de telle façon que l'organe de chaîne de remorquage (150), disposé dans le chemin de guidage (15), présente une position inclinée économisant la place.

3. Dispositif suivant la revendication 1 et la revendication 2, caractérisé en ce que l'élément porteur (10) comporte un plancher inférieur (12), sensiblement horizontal, ainsi qu'un plancher supérieur, disposé parallèlement à lui, à une certaine distance, au moyen des parois latérales (13, 14), et formé d'éléments de plancher (17, 19) et d'éléments de plancher (16, 16'), plancher supérieur dans le cas duquel l'élément central (16), adapté à l'élément (17), est incliné vers le bas, vers le plancher inférieur (12), pour former le chemin de guidage (15) et est relié à l'autre élément (19) par l'élément (16') disposé sensiblement perpendiculairement à lui.

4. Dispositif suivant les revendications 1 à 3, caractérisé en ce que les organes de guidage (25, 26) disposés sur les parois latérales (13, 14) sont disposées dans l'espace en dessous des deux éléments de plancher du haut (17, 19).

5. Dispositif suivant la revendication 1, caractérisé en ce que la pièce de tête (35), réalisée en forme de U, présente une partie médiane (40), reliant entre elles les deux branches latérales (37, 38), sur laquelle est disposé un carter (50, 68) réalisé pour recevoir au moins un moteur (60, 61, 62, 63 ou 85) attaquant la crémaillère (30) par l'intermédiaire d'un pignon denté (60', 61', 62', 63', 83).

6. Dispositif suivant la revendication 5, caractérisé en ce que, dans le carter (50) est disposé une rangée de moteurs à courant continu (60, 61, 62, 63), qui sont chacun reliés positivement avec la crémaillère (30) par le pignon denté (60', 61', 62', 63').

7. Dispositif suivant les revendications 5 et 6, caractérisé en ce que le carter (50) forme un unité de construction avec les moteurs (60, 61, 62, 63) forme une unité de construction et est fixé, de façon démontable, à la partie médiane (40) de la pièce de tête (35), au moyen d'une pièce élémentaire (55, 54) en forme de T, prévue sur la partie supérieure (53) du carter.

8. Dispositif suivant l'une des revendications 1 à 7, caractérisé en ce que, sur le carter (50, 68), est prévu un organe de répartition et de raccordement (70), disposé à l'extérieur de la pièce de tête (35) et fixée, de façon démontable, sur la barre (54) de la pièce en forme de T (55), cet organe de répartition étant relié, pour l'arrivée de l'énergie et des signaux, à un système de canal (57) disposé de façon appropriée dans le carter.

9. Dispositif suivant la revendication 1, caractérisé en ce que, sur chacun des deux côtés de l'élément porteur (10) est disposé un organe de protection (75, 75'), ces organes de protection, lorsqu'ils sont montés, formant dans le milieu de la zone supérieure une fente (76), orientée suivant la direction longitudinale de l'élément porteur (10), pour la pièce élémentaire (55) en forme de T, et étant réalisés de façon à arriver, sur les côtés, jusque dans la zone des pièces d'appui (36, 39), disposées sur la pièce de tête (35).

10. Dispositif suivant la revendication 1, caractérisé en ce que, sur les côtés, dans la zone inférieure de l'élément porteur (10), sont disposés deux autres organes de protection (80, 80'), qui sont également réalisés de façon à arriver jusque dans la zone des pièces d'appui (36, 39) et qui forment ensemble, avec les organes de protection (75, 75') du haut, des deux côtés, une fente (77, 78), orientée suivant la direction longitudinale de l'élément porteur (10), pour les pièces d'appui (36, 39) de la pièce de tête (35).

11. Dispositif suivant les revendications 9 et 10, caractérisé en ce que les organes de protection (75, 75'; 80, 80') sont fixés, de façon démontable, sur l'élément porteur (10), de préférence au moyen d'une liaison par griffes, réalisée en conséquence.

7

12. Dispositif suivant l'une des revendications 9 à 11, caractérisé en ce que les organes de protection (75, 75', 80, 80') sont réalisés de préférence dans une matière plastique appropriée, et que les corps creux, formés par des nervures et des âmes dans les différents organes de protection, sont garnis de mousse.

13. Dispositif suivant les revendications 1 et 9, caractérisé en ce que les deux parois latérales supérieures (18, 20) de l'élément porteur (10) sont réalisées sous la forme d'organes de protection du haut, et forment une fente (76), orientée suivant la direction longitudinale et séparant l'une de l'autre, dans cette zone, les parois latérales.

14. Dispositif suivant l'une des revendications 1 à 13, caractérisé en ce que l'élément porteur (10), avec les organes de protection (75, 75', 80, 80') et l'élément chariot (95), constitué des différentes pièces mécaniques ainsi que de l'alimentation en énergie et de l'arrivée des signaux, sont réalisés sous la forme d'un ensemble fermé, protégé contre des attaques extérieures.

## Claims

1. Device for an assembly system (100) of manipulation technology, consisting of at least one carrier element (10) constructed as a guideway (94) and at least one slide unit (95) arranged thereon in a linear and adjustable manner, said slide unit being in operative connection with an energy and signal source by means of a trailing cable element in an electric/pneumatic or electric/hydraulic manner and is constructed as an attachment element and carrier element for further periphery devices to be actuated accordingly, characterized in that

a) the carrier element (10) is constructed as a one-piece rigid cell construction, formed by several floors and side walls arranged at a distance to one another and passing through the carrier length, and is arranged between two upper perpendicular side walls (18, 20), has a guideway (15) passing through the carrier length for incorporating the trailing cable element (150), a floor (19) attached to one side of the guideway (15) for incorporating a gear rack (30) or suchlike as well as guide elements (25, 26) arranged laterally on two lower perpendicular side walls (13, 14) for supporting the slide unit (95), and

b) the slide unit (95) comprises a housing (50) for incorporating a drive unit (45), in operative connection with the gear rack (30), and a head piece (35) for incorporating the housing (50), said head piece (35) being constructed in a U-shape in profile cross section for the extensive enclosing of the housing (50) as well as the carrier element (10) and is mounted in a displaceable manner with its limbs (37, 38) on the guide elements (25, 26) of the carrier element (10).

2. Device according to claim 1, characterized in that the guideway (15) is constructed like a recess and is arranged in the carrier element (10) in such a way that the trailing cable element (150) arranged in the guideway (15) has a space-saving sloping position.

3. Device according to claim 1 and 2, characterized in that the carrier element (10) comprises an approximately horizontal lower floor (12) as well as an upper floor arranged by means of the side walls (13, 14) at a distance parallel thereto and formed from component parts (17, 19) and component parts (16, 16'), in which upper floor the middle component part (16) moulded on the component part (17) is inclined downwards in a sloping manner for the formation of the guideway (15) with respect to the lower floor (12) and is connected by means of the component part (16') arranged approximately at right angles thereto to the other component part (19).

4. Device according to claim 1 to 3, characterized in that the guide elements (25, 26) arranged on the side walls (13, 14) are arranged spatially beneath the two upper floor component parts (17, 19).

5. Device according to claim 1, characterized in that the head piece (35) constructed in a U-shape has an intermediate piece (40) connecting the two lateral limbs (37, 38) to one another, on which intermediate piece (40) there is arranged a housing (50, 68) constructed for incorporating at least one motor (60, 61, 62, 63 or 85) engaged with the gear rack (30) by means of a pinion (60', 61', 62', 63', 83).

6. Device according to claim 5, characterized in that direct-current motors (60, 61, 62, 63) arranged in series are arranged in the housing (50), each of which is operatively connected to the gear rack (30) by means of the pinion (60', 61', 62', 63').

7. Device according to claim 5 and 6, characterized in that the housing (50) forms a structural unit with the motors (60, 61, 62, 63) and is fastened in a detachable manner to the intermediate piece (40) of the head piece (35) by means of a T-shaped component part (55, 54) provided on the upper housing part (53).

8. Device according to one of claims 1 to 7, characterized in that on the housing (50, 68) there is provided a distributor and connection element (70) which is arranged outside the head piece (35), is fastened in a detachable manner on the flange (54) of the T-shaped component part (55) and is connected to a duct system (57), arranged correspondingly in the housing, for the energy and signal supply.

9. Device according to claim 1, characterized in that on both sides of the carrier element (10) there is arranged in each case a protective element (75, 75'), said protective elements in the assembled state in the upper, middle region forming a gap (76), orientated in the longitudinal direction of the carrier element (10), for the T-shaped component part (55) and being constructed laterally in such a way that they reach approximately into the region of the support parts (36, 39) arranged on the head piece (35).

10. Device according to claim 1, characterized in that two further protective elements (80, 80′) are arranged laterally in the lower region of the carrier element (10), said protective elements with their perpendicular component parts likewise being constructed so that they reach approximately into the region of the support parts (36, 39) and together with the upper protective elements (75, 75′) foming on both sides a gap (77, 78), orientated in the longitudinal direction of the carrier element (10), for the support parts (16, 19) of the head piece (35).

11. Device according to claim 9 and 10, characterized in that the protective elements (75, 75′ ; 80, 80′) are fastened to the carrier element (10) in a detachable manner, preferably by means of a clamping connection constructed accordingly.

12. Device according to claim 9 to 11, characterized in that the protective elements (80, 80′ ; 75, 75′) are manufactured preferably from suitable synthetic material and the cavities formed in the individual protective element by ribs and bars are packed with foamed material.

13. Device according to claim 1 and 9, characterized in that the two upper side walls (18, 20) of the carrier element (10) are constructed as upper protective elements and form a gap (76) orientated in the longitudinal direction and separating the side walls from one another in this region.

14. Device according to one of claims 1 to 13, characterized in that the carrier element (10) with the individual protective elements (75, 75′ ; 80, 80′) and the slide unit (95), formed from the individual function parts as well as the energy and signal supply, is constructed as a compact system protected against outer contact.

FIG. 1

FIG. 2

FIG. 3

FIG. 4